(19) Europäisches Patentamt
European Patent Office
Office européen des brevets

(11) **EP 2 934 904 B1**

(12) **EUROPÄISCHE PATENTSCHRIFT**

(45) Veröffentlichungstag und Bekanntmachung des Hinweises auf die Patenterteilung:
**21.02.2018   Patentblatt 2018/08**

(21) Anmeldenummer: **13814833.3**

(22) Anmeldetag: **18.12.2013**

(51) Int Cl.:
*B42D 15/00* (2006.01)          *G02B 3/00* (2006.01)
*G02B 27/06* (2006.01)          *G02B 5/09* (2006.01)
*B42D 25/30* (2014.01)          *B42D 25/29* (2014.01)

(86) Internationale Anmeldenummer:
**PCT/EP2013/003832**

(87) Internationale Veröffentlichungsnummer:
**WO 2014/095057 (26.06.2014 Gazette 2014/26)**

(54) **SICHERHEITSELEMENT MIT LINSENRASTERBILD**

SECURITY ELEMENT WITH A LENTICULAR IMAGE

ÉLÉMENT DE SÉCURITÉ AVEC UNE IMAGE LENTICULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012   DE 102012025266**

(43) Veröffentlichungstag der Anmeldung:
**28.10.2015   Patentblatt 2015/44**

(73) Patentinhaber: **Giesecke+Devrient Currency Technology GmbH**
**81677 München (DE)**

(72) Erfinder:
• **RAHM, Michael**
**83646 Bad Tölz (DE)**
• **FUHSE, Christian**
**83624 Otterfing (DE)**
• **KAULE, Wittich**
**82275 Emmering (DE)**

(56) Entgegenhaltungen:
**DE-A1-102008 062 475     US-A- 4 417 784**
**US-A1- 2009 180 191**

**Beschreibung**

Die Erfindung betrifft ein Sicherheitselement zur Absicherung von Sicherheitspapieren, Wertdokumenten und anderen Datenträgern, mit einem Linsenrasterbild zur unskalierten Darstellung von zwei oder mehr vorbestimmten Sollbildern, deren Motive durch visuell erkennbare, kontrastierende Bildbereiche gebildet sind. Die Erfindung betrifft auch ein Verfahren zum Herstellen eines derartigen Sicherheitselements, sowie einen mit einem Sicherheitselement ausgestatteten Datenträger.

Datenträger, wie etwa Wert- oder Ausweisdokumente, aber auch andere Wertgegenstände wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, Kreditkarten, Gesundheitskarten, sowie Produktsicherungselemente wie Etiketten, Siegel, Verpackungen und dergleichen. Der Begriff "Datenträger" schließt im Folgenden alle derartigen Gegenstände, Dokumente und Produktsicherungsmittel ein.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen. Beispielsweise können die Sicherheitselemente ein Kipp- oder Wechselbild, ein Bewegungsbild oder ein Stereobild enthalten.

In diesem Zusammenhang ist es bekannt, Datenträger, beispielsweise Ausweiskarten, zur Absicherung mit lasergravierten Kippbildern zu versehen. Dabei werden zwei oder mehr verschiedene Kennzeichnungen, beispielsweise eine Seriennummer und ein Ablaufdatum, unter unterschiedlichen Winkeln durch eine Anordnung zylindrischer Linsen in die Karte lasergraviert. Die Laserstrahlung erzeugt dabei eine lokale Schwärzung des Kartenkörpers, die die eingravierten Kennzeichnungen visuell sichtbar macht. Bei der Betrachtung ist je nach Blickwinkel nur die jeweils aus dieser Richtung eingravierte Kennzeichnung sichtbar, so dass durch eine Verkippung der Karte senkrecht zur Achse der Zylinderlinsen ein optisch variabler Kippeffekt entsteht.

Der Einsatz von reflektiven Reliefmustern bei Wechselbildanordnungen mit zylindrischen Linsen ist im Wesentlichen in Form von parallel zur Längsrichtung der Zylinderlinsen angeordneten Reliefs bekannt, wie z. B. in der US 4,417,784 A1 beschrieben ist. Je nach Neigung der in Form von ebenen Mikrospiegeln ausgebildeten nebeneinander angeordneten Abschnitte des Reliefmusters werden diese hell oder dunkel wahrgenommen.

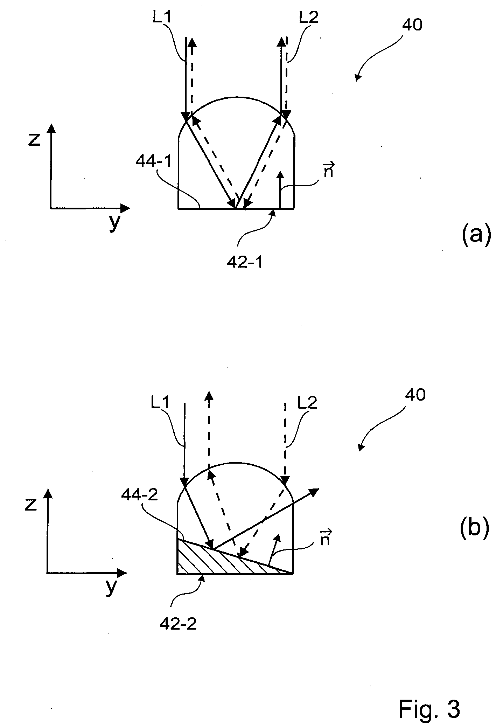

Das Prinzip solcher Linsenanordnungen wird nun mit Bezug auf die schematische Darstellung der Figur 3 erläutert. Dort ist unter der Annahme idealisierter Zylinderlinsen exemplarisch der Strahlengang der rechten bzw. linken Randstrahlen für den Fall senkrechten Lichteinfalls (entspricht senkrechter Aufsicht) eingezeichnet. Ferner wird vorausgesetzt, dass sich die Mikrospiegel in der Brennebene der Linsen befinden.

In den in Figur 3 gezeigten Ausschnitten eines bekannten Linsenrasterbilds 40 sind jeweils unter einer Zylinderlinse angeordnete, als Mikrospiegel ausgebildete Facetten 42-1 und 42-2 einer ersten und einer zweiten Art im Querschnitt gezeigt. Die Mikrospiegel 42-1, 42-2 weisen jeweils eine Reflexionsfläche 44-1, 44-2 auf, die die optisch wirksame Fläche der Facette ist und deren Orientierung durch die Angabe des Oberflächennormalenverktors $\vec{n}$ bestimmt ist. Der Oberflächennormalenvektor $\vec{n} = (n_x, n_y, n_z)$ soll dabei auf 1 normiert sein und eine positive z-Komponente aufweisen. Unter diesen Bedingungen ist der Oberflächennormalenvektor bereits allein durch die $n_x$- und ny-Komponenten bestimmt. Die $n_z$-Komponente ergibt sich unmittelbar daraus und wird daher im Weiteren nicht mehr erwähnt.

Fig. 3(a) zeigt den Fall, dass die Reflexionsfläche 44-1 des Mikrospiegels 42-1 nicht gegen die Oberfläche der Linsenanordnung geneigt ist. Für den gezeigten Mikrospiegel sind sowohl die $n_x$-Komponente als auch die ny-Komponente des Oberflächennormalenvektors $\vec{n}$ null. Die einfallende Strahlung (Lichtstrahlen L1, L2) wird in diesem Fall in dieselbe Richtung zurückgeworfen, aus der sie eingetreten ist. Die Lichtstrahlen L1, L2 verlassen die Linsenanordnung alle durch die Linse, durch die sie auch eingefallen sind, und werden alle in dieselbe Richtung zurückgeworfen.

Bei dem in Fig. 3(b) gezeigten Fall ist die Reflexionsfläche des Mikrospiegels 42-2 gegen die Oberfläche der Linsenanordnung und senkrecht zur Längsrichtung der Zylinderlinsen bzw. in Krümmungsrichtung der Zylinderlinsen geneigt. Der Oberflächennormalenvektor $\vec{n}$ weist daher eine Komponente in Richtung der y-Achse auf, die $n_x$- Komponente des Mikrospiegels 42-2 dagegen ist null.

Wie in Fig. 3(b) gezeigt, verlässt der Teil der Strahlung, der nach der Reflexion an dem Mikrospiegel 42-2 die Linsenanordnung durch die Linse verlässt, durch die er eingefallen ist, die Linsenanordnung ebenfalls senkrecht nach oben. Die Neigung des Mikrospiegels hat bei diesem Teil der Strahlung keinen Einfluss auf Ausbreitungsrichtung (siehe Lichtstrahl L2: nach Verlassen der Linse entspricht die Ausbreitungsrichtung im Wesentlichen der Ausbreitungsrichtung der Strahlung in dem in Figur 3(a) dargestellten Fall, wobei der Lichtstrahl L2 im Vergleich hierzu lediglich etwas versetzt austritt). Ein Teil der Strahlung (hier der Lichtstrahl L1) läuft nach Reflexion an dem Mikrospiegel 42-2 jedoch an der Linse vorbei und verlässt die Anordnung beispielsweise durch eine benachbarte Linse. In diesem Fall wird die Ausbreitungsrichtung der Lichtstrahlen verändert. Nach Verlassen breitet sich der Lichtstrahl L1 in eine Richtung aus, die durch Brechung an der Oberfläche der ersten Linse, Neigung des Mikrospiegels in Bezug auf die Oberfläche der Linsenanordnung und Brechung an der Oberfläche einer benachbarten (und hier nicht gezeigten) zweiten Linse bestimmt ist.

Somit entsteht zwar ein Kontrast gegenüber dem in Fig. 3(a) gezeigten Fall, bei dem die Reflexionsfläche des Mikrospiegels nicht gegen die Oberfläche der Linsenanordnung geneigt ist, dieser ist aber vergleichsweise schwach. So verhält sich ein Teil der Strahlung (beispielhaft Lichtstrahl L2) praktisch wie in dem in Fig. 3(a) gezeigten einfachsten Fall. Lediglich bei dem verbleibenden Teil der Strahlung wird die Ausbreitungsrichtung verändert. Allerdings weisen in der Regel nicht alle Lichtstrahlen, die die Anordnung durch eine andere Linse verlassen, die gleiche Ausbreitungsrichtung auf, sondern "fächern auf". Insgesamt überlagern sich die optischen Wirkungen der Linsen und Mikrospiegel hier so, dass eine Ablenkung der Strahlung in einen engen definierten Winkelbereich praktisch nicht möglich ist. Dies führt zu einem vergleichsweise geringen Kontrast.

Davon ausgehend liegt der Erfindung die Aufgabe zugrunde, ein Sicherheitselement der eingangs genannten Art anzugeben, dass eine hohe Fälschungssicherheit mit einem kontrastreichen Erscheinungsbild verbindet.

Diese Aufgabe wird durch die Merkmale der unabhängigen Ansprüche gelöst. Weiterbildungen der Erfindung sind Gegenstand der Unteransprüche.

Gemäß der Erfindung enthält das Linsenrasterbild des eingangs genannten Sicherheitselements ein Linsenraster und ein von dem Linsenraster beabstandet angeordnetes Motivbild, das bei Betrachtung mit dem Linsenraster die vorbestimmten Sollbilder zeigt, wobei das Linsenraster aus einer Mehrzahl von zylindrischen Mikrolinsen gebildet ist, die in einem Raster angeordnet sind, durch welches ein Koordinatensystem mit einer ersten Koordinatenachse, die durch die Brennpunktlinien der zylindrischen Mikrolinsen bestimmt ist, und einer zweiten Koordinatenachse aufgespannt ist, die senkrecht auf der ersten Koordinatenachse steht, und das Motivbild aus einer Mehrzahl von Elementarzellen gebildet ist, welche im Raster des Linsenrasters zueinander versetzt angeordnet sind, wobei jede der Elementarzellen in zwei oder mehr Teilflächen parallel zu der ersten Koordinatenachse zerlegt ist, jede dieser Teilflächen genau einem der Sollbilder zugeordnet ist und jeweils einen unskalierten Ausschnitt des Sollbilds enthält, dem die Teilfläche zugeordnet ist. Weiter ist das Motivbild erfindungsgemäß durch eine Mehrzahl optisch wirksamer Facetten gebildet, deren Orientierungen durch ihre Normalenvektoren bestimmt sind, wobei in dem Motivbild zumindest zwei Gruppen von optisch wirksamen Facetten mit unterschiedlicher Orientierung vorgesehen sind, wobei die zumindest zwei Gruppen jeweils zumindest eine optisch wirksame Facette enthalten und bei Betrachtung mit dem Linsenraster die visuell erkennbaren, kontrastierenden Bildbereiche der Sollbilder erzeugen, wobei die Normalenvektoren der optisch wirksamen Facetten keine Komponente in Richtung der zweiten Koordinatenachse aufweisen oder eine Komponente in Richtung der zweiten Koordinatenachse aufweisen, die um zumindest eine Größenordnung kleiner ist als die Komponente in Richtung der ersten Koordinatenachse.

Die Orientierung der Facetten wird hier durch zwei zueinander orthogonale Parameter, d.h. durch die zwei Komponenten des Normalenvektors der jeweiligen Facette bestimmt. Natürlich kann die Orientierung der Facetten auch durch andere Parameter bestimmt sein. Insbesondere handelt es sich dabei um die Neigung und/oder den Azimut-Winkel der jeweiligen Facette.

Bei dem erfindungsgemäßen Sicherheitselement schließt die Projektion des Normalenvektors in die Ebene, die durch die erste und die zweite Koordinatenachse aufgespannt wird, mit der ersten Koordinatenachse insbesondere einen Winkel von 0 ° ein.

Bei einer vorteilhaften Ausgestaltung weisen die Normalenvektoren der optisch wirksamen Facetten keine Komponente in Richtung der zweiten Koordinatenachse auf. Die Komponente in Richtung der zweiten Koordinatenachse, d. h. in Krümmungsrichtung der zylindrischen Mikrolinsen, ist null. Mit anderen Worten, die Facetten sind allenfalls in Richtung der ersten Koordinatenachse gegen die Oberfläche des Sicherheitselements geneigt. Dabei ist auch die Gestaltung eingeschlossen, bei der die optisch wirksamen Facetten nicht gegen die Oberfläche des Sicherheitselements geneigt sind, also weder eine Komponente in Richtung der zweiten Koordinatenachse noch eine Komponente in Richtung der ersten Koordinatenachsen aufweisen. Wie nachfolgend noch genauer erläutert, verlassen bei dem erfindungsgemäßen Sicherheitselement Bündel parallel einfallender Lichtstrahlen die Linsen als Bündel weitgehend paralleler Lichtstrahlen in eine Richtung, die durch die Neigung der Facetten vorgegeben ist. Durch Variation der Neigung bzw. der Komponente des jeweiligen Normalenvektors der Facetten in Richtung der ersten Koordinatenachse lassen sich daher sehr kontrastreiche Darstellungen erzeugen.

Seit einiger Zeit werden sogenannte Moiré-Vergrößerungsanordnungen und andere mikrooptische Darstellungsanordnungen als Sicherheitsmerkmale eingesetzt. Die prinzipielle Funktionsweise von Moire-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Kurz gesagt bezeichnet Moiré-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, das aus einer periodischen Anordnung vergrößerter und gegebenenfalls gedrehter Bilder der Elemente des Bildrasters besteht.

Bei mikrooptischen Darstellungsanordnungen wie den vorstehend genannten Moiré-Vergrößerungsanordnungen werden üblicherweise sowohl das Raster der Bildobjekte als auch das Linsenraster durch UV-Prägungen auf gegenüberliegenden Seiten einer Trägerfolie hergestellt. Die Dicke der Trägerfolie ist dabei so bemessen, dass sich die Bildobjekte unter Berücksichtigung der beiden Restlackdicken genau in der Fokusebene der Linsen befinden. Das Moiré-vergrößerte Bild wird allerdings unscharf, wenn die Position der Bildobjekte zu weit von der Fokusebene abweicht. Für Anwendungen bei Banknoten oder anderen Wertdokumenten erfordert dies eine hohe Genauigkeit von nur wenigen Mikrometern.

Die erfindungsgemäßen Linsenrasterbilder sind dagegen auf eine unskalierte Darstellung von Sollbildern gerichtet, also auf eine Darstellung, die weder vergrößert noch verkleinert ist. Sie haben sich gegenüber Abweichungen der Motivbildebene von der Fokusebene als wesentlich robuster herausgestellt als vergrößernde Systeme. Weicht die Lage der Motivbildebene nämlich von der Fokusebene ab, so vergrößern sich bei unskaliert darstellenden Systemen lediglich die Winkelbereiche, in denen Übergänge zwischen verschiedenen Sollbildern stattfinden, auf Kosten der Winkelbereiche, in denen jeweils nur ein Sollbild sichtbar ist. Die für das visuelle Erscheinungsbild wesentlich bedeutsamere Schärfe der Sollbilder wird dagegen von der Abweichung nicht beeinträchtigt. Dieser Effekt kann auch gezielt dazu genutzt werden, um die Dicke der Trägerfolie und damit die Gesamtdicke des Sicherheitselements weiter zu reduzieren. Dabei sollte berücksichtigt werden, dass Abweichungen der Motivbildebene von der Fokusebene auch zu einer Auffächerung der Strahlenbündel führen und damit gegebenenfalls den Kontrast abschwächen können.

Die relative Lage der zylindrischen Mikrolinsen und der Teilfläche der Elementarzellen legen jeweils einen Betrachtungswinkelbereich fest, aus der das Sollbild, dem die Teilfläche zugeordnet ist, bei der Betrachtung unskaliert gezeigt ist. Die dargestellten Sollbilder sind dabei jeweils aus einem gewissen Betrachtungswinkelbereich um eine zentrale Betrachtungsrichtung herum sichtbar, wobei die Größe dieses Sichtbarkeitsbereichs insbesondere durch die Größe der Teilflächen gegeben ist. Abkürzend wird im Rahmen dieser Beschreibung manchmal von einer Betrachtungsrichtung gesprochen, wobei sich versteht, dass diese Angabe den durch die endliche Größe der Teilflächen bestimmten Sichtbarkeitsbereich um diese Betrachtungsrichtung herum mit einschließt.

Im Rahmen der Erfindung weisen die Elementarzellen des Motivbilds alle dieselbe Umrissform auf und sind in dieselbe Anzahl von Teilflächen zerlegt. Nicht identisch ist in der Regel der von den Teilflächen gezeigte Bildinhalt, da dieser jeweils einen Ausschnitt eines der darzustellenden Sollbilder enthält und somit vom Bildinhalt der Sollbilder bestimmt wird.

Bei einer vorteilhaften Ausgestaltung weisen die Normalenvektoren der optisch wirksamen Facetten jeweils nur eine Komponente in Richtung der ersten Koordinatenachse auf. Die Facetten sind daher in Richtung der ersten Koordinatenachse gegen die Oberfläche des Sicherheitselements geneigt.

Die optisch wirksamen Facetten sind mit Vorteil als reflektive Facetten ausgebildet.

In einer vorteilhaften Ausgestaltung sind in dem Motivbild zumindest drei Gruppen von optisch wirksamen Facetten mit unterschiedlicher Orientierung vorgesehen, wobei jeweils zwei der Gruppen bei Betrachtung mit dem Linsenraster die visuell erkennbaren, kontrastierenden Bildbereiche eines der Sollbilder erzeugen.

Ebenfalls mit Vorteil sind in zumindest einer der einem der Sollbilder zugeordneten Teilflächen zumindest drei Gruppen von optisch wirksamen Facetten mit unterschiedlicher Orientierung vorgesehen.

Zumindest eine der Gruppen von optisch wirksamen Facetten kann mehrere der optisch wirksamen Facetten mit gleicher Orientierung aufweisen. In vorteilhaften Ausgestaltungen weist jede der Gruppen mehrere der optisch wirksamen Facetten mit gleicher Orientierung auf.

Die Orientierungen der optisch wirksamen Facetten können sich auch zumindest bereichsweise kontinuierlich ändern. Damit lässt sich beispielsweise ein Sollbild mit einem durch die Facettenorientierungen vorgegebenen Laufeffekt oder Wölbeffekt erzeugen.

Die optisch wirksamen Facetten können mit Vorteil ein periodisches oder aperiodisches Sägezahngitter bilden. Bei aperiodischen Gittern können in vorteilhafter Weise Beugungseffekte, insbesondere Farbeffekte, wie z.B. diffraktive Farbeinstreuung, unterdrückt werden. Die Gitterperiode der Facetten liegt vorzugsweise zwischen 2,5 $\mu$m und 100 $\mu$m, bevorzugt zwischen 5 $\mu$m und 20 $\mu$m.

Die Facetten sind bevorzugt als im Wesentlichen ebene Flächenstücke ausgebildet, was die Herstellung erleichtert. Die gewählte Formulierung, nach der die Facetten als im Wesentlichen ebene Flächenstücke ausgebildet sind, trägt dabei der Tatsache Rechnung, dass sich in der Praxis herstellungsbedingt in der Regel nie perfekt ebene Flächenstücke herstellen lassen. Die Facetten können alternativ auch als gekrümmte (z. B. konkave, konvexe oder gewellte) Flächenstücke ausgebildet sein. Die Krümmung der Flächenstücke ist dabei zweckmäßig gering.

Bei dem erfindungsgemäßen Sicherheitselement kann die Anzahl der Facetten insbesondere so gewählt sein, dass eine maximale vorgegebene Facettenhöhe bzw. die Strukturtiefe der Facetten nicht überschritten wird. Die Facetten weisen insbesondere eine Strukturtiefe von 0 $\mu$m bis 10 $\mu$m, bevorzugt von 1,5 $\mu$m bis

4 μm auf. Die Abmessung der Facetten in Richtung der ersten Koordinatenachse kann dabei zwischen 2,5 μm und 100 μm, bevorzugt zwischen 5 μm und 20 μm liegen.

Die Ausdehnung der zylindrischen Mikrolinsen in Richtung der ersten Koordinatenachse beträgt mit Vorteil mehr als 250 μm, bevorzugt mehr als 500 μm, besonders bevorzugt mehr als 2 mm. Die Ausdehnung der zylindrischen Mikrolinsen in Querrichtung beträgt vorzugsweise zwischen 5 μm und 100 μm, besonders bevorzugt zwischen 10 μm und 30 μm.

Bei dem erfindungsgemäßen Sicherheitselement kann auf den Facetten zumindest bereichsweise eine reflektierende oder reflexionserhöhende Beschichtung ausgebildet sein. Reflexionserhöhende Beschichtungen im Sinne der Erfindung sind auch Beschichtungen, die den Reflexionsgrad beispielsweise nur von etwa 20% auf etwa 50% erhöhen, wie z.B. semitransparente Schichten, wohingegen bei reflektierenden Beschichtungen ein sehr hoher Reflexionsgrad vorliegt. Die reflexionserhöhende Beschichtung kann eine metallische Beschichtung sein, die beispielsweise aufgedampft ist. Als Beschichtungsmaterial kann insbesondere Aluminium, Gold, Silber, Kupfer, Palladium, Chrom, Nickel und/oder Wolfram sowie deren Legierungen verwendet werden. Alternativ kann die reflexionserhöhende Beschichtung durch eine Beschichtung mit einem Material mit hohem Brechungsindex gebildet werden.

In vorteilhaften Ausgestaltungen kann die reflektierende oder reflexionserhöhende Beschichtung nur bereichsweise, vorzugsweise in Form von Mustern, Zeichen oder einer Codierung, derart ausgebildet sein, dass sich die Bereiche, in denen die Beschichtung ausgebildet ist, für die jeweiligen, einem der Sollbilder zugeordneten Teilflächen unterscheiden. Die Bereiche bilden dabei jeweils ein makroskopisches, mit bloßem Auge ohne Hilfsmittel, insbesondere ohne Vergrößerung durch die Mikrolinsen, sichtbares zusätzliches Motiv.

Insbesondere kann auf den Facetten zumindest bereichsweise eine farbkippende Schicht ausgebildet sein. Gemäß einer vorteilhaften Ausgestaltung können auch bereichsweise unterschiedliche farbkippende Schichten auf den Facetten ausgebildet sein. Sowohl die reflexionserhöhende Beschichtung als auch die farbkippende Schicht können in Form von Mustern, Zeichen oder Codierungen vorliegen und/oder Aussparungen in Form von Mustern, Zeichen oder Codierungen aufweisen.

Die farbkippende Schicht kann insbesondere als Dünnschichtsystem bzw. Dünnfilm-Interferenzbeschichtung ausgebildet sein. Dabei kann z.B. eine Schichtfolge Metallschicht/ dielektrische Schicht/Metallschicht oder eine Schichtfolge aus mindestens drei dielektrischen Schichten, wobei die Brechzahl der mittleren Schicht geringer ist als die Brechzahl der beiden anderen Schichten, verwirklicht werden. Als dielektrisches Material kann z.B. ZnS, SiO$_2$, TiO$_2$, MgF$_2$ verwendet werden.

Die farbkippende Schicht kann auch als Interferenzfilter, dünne semitransparente Metallschicht mit selektiver Transmission durch Plasmaresonanzeffekte, Nanopartikel, etc. ausgebildet sein. Die farbkippende Schicht kann insbesondere auch als Flüssigkristallschicht realisiert sein. Auch ein Dünnfilmsystem mit einem Aufbau Reflektor/Dielektrikum/Absorber ist möglich.

In vorteilhaften Ausgestaltungen ist auf einem Teil der optisch wirksamen Facetten eine zusätzliche Strukturierung, bevorzugt eine Nanostrukturierung, insbesondere durch farbige Subwellenlängenstrukturen, die in die nullte Beugungsordnung reflektieren, und/oder eine diffraktive Struktur vorgesehen.

Bei dem erfindungsgemäßen Sicherheitselement können ferner die optisch wirksamen Facetten in den Teilflächen für alle Motivdarstellungen jeweils gleich in der Art orientiert sein, dass ein Betrachter in einer anderen Betrachtungs- oder Beleuchtungssituation die Negativdarstellungen der Motivdarstellung der zugeordneten Sollbilder sieht.

Das Linsenrasterbild kann insbesondere ein Wechselbild, ein Bewegungsbild, ein Pumpbild, ein Morphbild oder ein Stereobild sein. Dabei bezeichnet ein Wechselbild ein Bild, das unter unterschiedlichen Betrachtungswinkeln unterschiedliche Bilder zeigt, so dass der Bildeindruck für den Betrachter zwischen zwei oder mehreren Bildern wechselt. Ein Bewegungsbild ist ein Bild, das unter unterschiedlichen Betrachtungswinkeln ein Bildmotiv in unterschiedlichen Bewegungszuständen zeigt, so dass für den Betrachter beim Kippen scheinbar eine Bewegung abläuft. Ein Pumpbild ist ein Bild, das unter unterschiedlichen Betrachtungswinkeln ein sich vergrößerndes oder verkleinerndes Bildmotiv zeigt, so dass für den Betrachter beim Kippen der Eindruck eines sich in der Größe verändernden Bildmotivs entsteht. Ein Morphbild ist ein Bild, bei dem sich beim Kippen ein Startbild über eine definierte Anzahl von Zwischenstadien in ein Endbild verwandelt. Schließlich ist ein Stereobild ein Bild, das zumindest zwei Ansichten eines Bildmotivs aus unterschiedlichen Betrachtungsrichtungen zeigt. Die Betrachtungswinkel der Ansichten werden auf Grundlage eines vorgewählten Betrachtungsabstands für das Linsenrasterbild so gewählt, dass für den Betrachter ein Stereobild des Bildmotivs entsteht.

Die Anordnung von zylindrischen Mikrolinsen kann darüber hinaus mit einer Schutzschicht versehen sein, deren Brechungsindex vorzugsweise um mindestens 0,3 von dem Brechungsindex der Zylinderlinsen abweicht. In diesem Fall ändert sich durch die Schutzschicht die Brennweite der Linsen, was bei der Dimensionierung der Linsen-Krümmungsradien und/oder der Dicke der Abstandsschicht berücksichtigt werden muss. Neben dem Schutz vor Umwelteinflüssen verhindert eine derartige Schutzschicht auch, dass sich die Zylinderlinsen zu Fälschungszwecken leicht abformen lassen.

Das Sicherheitselement ist mit Vorteil ein Sicherheitsfaden, ein Aufreißfaden, ein Sicherheitsband, ein Sicherheitsstreifen, ein Patch oder ein Etikett zum Aufbringen auf ein Sicherheitspapier, Wertdokument oder dergleichen.

Die Erfindung enthält auch einen Datenträger, der mit einem Sicherheitselement der oben beschriebenen Art ausgestattet ist. Das Sicherheitselement kann dabei insbesondere in den Datenträger eingebettet sein oder auf den Datenträger aufgebracht sein.

Die Erfindung enthält weiter ein Verfahren zum Herstellen eines Sicherheitselements mit einem Linsenrasterbild zur unskalierten Darstellung von zwei oder mehr vorbestimmten Sollbildern, deren Motive durch visuell erkennbare, kontrastierende Bildbereiche gebildet sind, bei dem

- zur Erzeugung eines Linsenrasterbilds ein Motivbild beabstandet von einem Linsenraster angeordnet wird, so dass das Motivbild bei Betrachtung mit dem Linsenraster die vorbestimmten Sollbilder zeigt, wobei
- das Linsenraster aus einer Mehrzahl von zylindrischen Mikrolinsen gebildet wird, die in einem Raster angeordnet sind, durch welches ein Koordinatensystem mit einer ersten Koordinatenachse, die durch die Brennpunktlinien der zylindrischen Mikrolinsen bestimmt ist, und einer zweiten Koordinatenachse aufgespannt ist, die senkrecht auf der ersten Koordinatenachse steht,
- das Motivbild aus einer Mehrzahl von Elementarzellen gebildet wird, welche im Raster des Linsenrasters zueinander versetzt angeordnet werden, wobei
- jede der Elementarzellen in zwei oder mehr Teilflächen parallel zu der ersten Koordinatenachse zerlegt wird, jede dieser Teilflächen genau einem der Sollbilder zugeordnet wird und jeweils mit einem unskalierten Ausschnitt des Sollbilds versehen wird, dem die Teilfläche zugeordnet ist, wobei
- das Motivbild durch eine Mehrzahl optisch wirksamer Facetten gebildet wird, deren Orientierungen durch ihre Normalenvektoren bestimmt werden, wobei
- in dem Motivbild zumindest zwei Gruppen von optisch wirksamen Facetten mit unterschiedlicher Orientierung vorgesehen werden, wobei die zumindest zwei Gruppen jeweils mit zumindest einer optisch wirksamen Facette versehen werden und bei Betrachtung mit dem Linsenraster visuell erkennbare, kontrastierende Bildbereiche der Sollbilder erzeugen, und wobei
- die Normalenvektoren der optisch wirksamen Facetten keine Komponente in Richtung der zweiten Koordinatenachse aufweisen oder eine Komponente in Richtung der zweiten Koordinatenachse aufweisen, die um zumindest eine Größenordnung kleiner ist als die Komponente in Richtung der ersten Koordinatenachse.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1    eine schematische Darstellung einer Banknote mit einem erfindungsgemäßen Sicherheitselement, das ein Wechselbild mit zwei unterschiedlichen Sollbildern enthält,

Fig. 2    schematisch den Aufbau eines erfindungsgemäßen Sicherheitselements, beispielsweise des Transferelements im Querschnitt,

Fig. 3    schematisch die Wirkungsweise von Mikrospiegeln, wie sie in Linsenrasterbildern gemäß dem Stand der Technik eingesetzt werden,

Fig. 4    schematisch die Wirkungsweise von Mikrospiegeln, wie sie in erfindungsgemäßen Linsenrasterbildern eingesetzt werden, wobei (a) eine perspektivische Ansicht und (b), (c) jeweils eine Querschnittsansicht von Linsenanordnungen mit unterschiedlich ausgerichteten Facetten zeigt,

Fig. 5    schematisch einen Ausschnitt einer Elementarzelle des Motivbilds eines erfindungsgemäßen Sicherheitselements, beispielsweise des Transferelements der Fig.1, in Aufsicht,

Fig. 6    in (a) eine schematische Querschnittsansicht entlang der Linie V-A in Figur 5 und in (b) eine schematische Querschnittsansicht entlang der Linie V-B in Figur 5,

Fig. 7    schematisch den Aufbau des Motivbilds eines weiteren erfindungsgemäßen Sicherheitselements im Querschnitt, und

Fig. 8    schematisch den Aufbau des Motivbilds eines noch weiteren erfindungsgemäßen Sicherheitselements im Querschnitt.

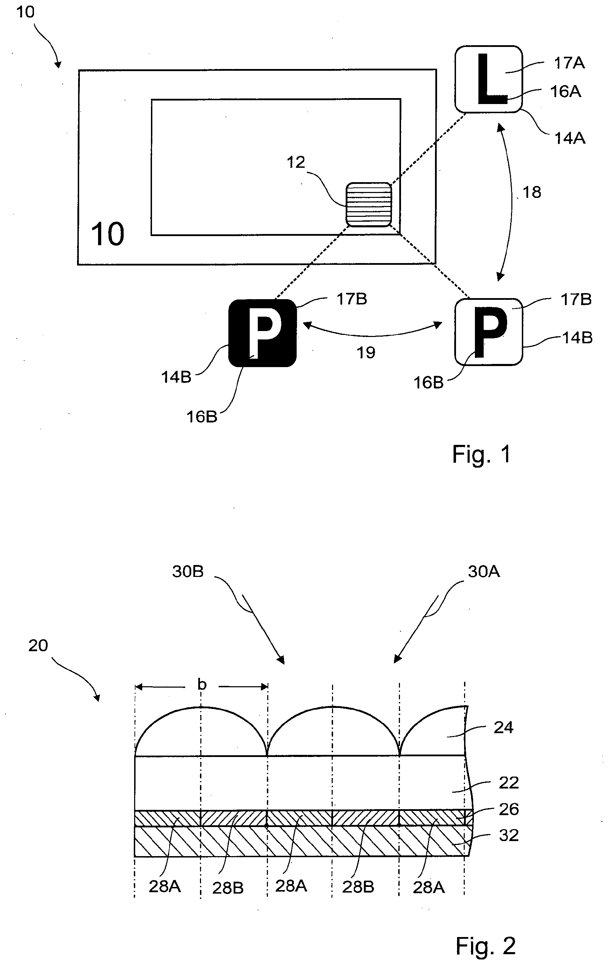

Die Erfindung wird nun am Beispiel von Sicherheitselementen für Banknoten und andere Wertdokumente erläutert. Figur 1 zeigt dazu eine schematische Darstellung einer Banknote 10, die mit einem erfindungsgemäßen Sicherheitselement in Form eines aufgeklebten Transferelements 12 versehen ist. Das Transferelement 12 stellt im Ausführungsbeispiel ein Wechselbild dar, das dem Betrachter aus zwei verschiedenen Betrachtungsrichtungen unterschiedliche Sollbilder 14A bzw. 14B präsentiert. Die Sollbilder 14A, 14B zeigen jeweils ein Motiv, das durch visuell erkennbare und kontrastierende Bildbereiche 16A, 16B bzw. 17A, 17B gebildet ist.

Im Ausführungsbeispiel sind die Motive der Sollbilder durch metallisch glänzende, dunkel erscheinende Buchstaben "L" bzw. "P" vor einem ebenfalls metallisch glänzenden, aber hell erscheinenden Hintergrund gebildet (hier dargestellt durch die schwarzen Buchstaben "P" und "L" vor weißem Hintergrund), wobei der Betrachter bei Betrachtung schräg von oben den Buchstaben "L", bei Betrachtung schräg von unten den Buchstaben "P" wahrnimmt. Durch Kippen der Banknote in Nord-Süd-Richtung 18 wechselt das Erscheinungsbild des Sicherheitselements zwischen den beiden Sollbildern 14A, 14B hin und her. Es versteht sich, dass in der Praxis zumeist komplexere Motive, beispielsweise die Denomination der Banknote, geometrische Muster, Portraits, architektonische, technische oder Naturmotive verwendet werden. Die Motive können dabei insbesondere auch in Form von gerasterten Halbtondarstellungen vorliegen. Auch kann ein Wechselbild mehr als zwei Sollbilder enthalten oder das Sicherheitselement kann anstelle eines Wechselbilds ein Bewegungsbild, ein Pumpbild, ein Morphbild oder ein Stereobild aufweisen.

Eine Besonderheit des erfindungsgemäßen Transferelements 12 besteht darin, dass zusätzlich zu dem vorstehend beschriebenen Wechsel zwischen den Sollbildern 14A, 14B bei einem Kippen in Nord-Süd-Richtung 18 ein Kontrastwechsel bzw. eine Kontrastumkehr des jeweiligen Motivs bei einem Kippen des Sicherheitselements in Ost-West-Richtung 19 auftreten kann, wie nachstehend noch näher erläutert. Das jeweilige Motiv wechselt dann beispielsweise von einem dunkel erscheinenden Buchstaben "P" bzw. "L" vor hell erscheinendem Hintergrund zu einem hell erscheinenden Buchstaben "P" bzw. "L" vor dunkel erscheinendem Hintergrund, wie in Fig. 1 beispielhaft für den Buchstaben "P" gezeigt.

Die Erfindung ist nicht in irgendeiner Weise auch nicht auf die zur Illustration verwendeten Transferelemente bei Banknoten beschränkt, sondern kann beispielsweise auch bei Sicherheitsfäden, breiten Sicherheitsstreifen oder Abdeckfolien eingesetzt werden, die über einem Fensterbereich oder einer durchgehenden Öffnung eines Dokuments angeordnet sind. Insbesondere ist es auch denkbar, dass die Zylinderlinsen bzw. die optisch wirksamen Facetten auf unterschiedlichen Seiten eines zumindest bereichsweise transparenten Banknotensubstrats, beispielsweise eines Substrats aus polymerem Material, aufgebracht sind.

Figur 2 zeigt schematisch den Aufbau eines erfindungsgemäßen Sicherheitselements 20, beispielsweise des Transferelements 12 der Fig.1 im Querschnitt. Dargestellt sind hier, wie auch in den weiteren Figuren, nur die für die Erläuterung des Funktionsprinzips erforderlichen Teile des Aufbaus.

Das Sicherheitselement 20 der Fig. 2 weist einen Träger 22 in Form einer transparenten Kunststofffolie, beispielsweise einer etwa 20 μm dicken PET-Folie auf. Die Oberseite des Trägers 22 ist mit einem Betrachtungsraster in Form einer Mehrzahl paralleler Zylinderlinsen 24 versehen, deren Breite b im Ausführungsbeispiel b = 20 μm beträgt. Auf der Unterseite des Trägers 22 ist eine Motivschicht 26 ausgebildet, die in parallel zu den Zylinderlinsen 24 verlaufende schmale Streifen bzw. Teilflächen 28A, 28B mit einer Breite von jeweils 10 μm unterteilt ist. Die Trägerfolie 22 und die Zylinderlinsen 24 sind hier so aufeinander abgestimmt, dass sich die Motivschicht 26 in der Fokusebene der Zylinderlinsen 24 befindet.

Bei Betrachtung des Sicherheitselements 20 aus der Betrachtungsrichtung 30A sind wegen der fokussierenden Wirkung der Zylinderlinsen 24 nur die Streifen 28A und bei Betrachtung aus der Betrachtungsrichtung 30B nur die Streifen 28B sichtbar. Die Streifen 28A bzw. 28B setzen sich daher für den Betrachter zu den gewünschten Sollbildern, beispielsweise den Sollbildern 14A, 14B der Fig.1 zusammen. Bei der Auslegung der Motivschicht 26 wurden die gewünschten Sollbilder 14A, 14B dazu in an sich bekannter Weise in parallele Streifen 28A, 28B der gewünschten Breite unterteilt und die so erhaltenen Streifen alternierend zu der Motivschicht 26 zusammengesetzt. Die parallelen Streifen 28A, 28B müssen nicht die gleiche Breite aufweisen. Beispielsweise kann der Streifen 28A auch eine Breite von 5 μm und der Streifen 28B eine Breite von 15 μm aufweisen. Der Anteil des jeweiligen Streifens an der Gesamtbreite wirkt sich dabei auf den Winkelbereich aus, in dem die gewünschten Sollbilder 14A, 14B für den Betrachter sichtbar sind.

Wie in Fig. 2 gezeigt, enthält das Sicherheitselement 20 typischerweise weitere Schichten 32, wie etwa Schutz-, Abdeck- oder weitere Funktionsschichten, die für die vorliegende Erfindung jedoch nicht wesentlich sind und daher nicht näher beschrieben werden. Auch auf den Zylinderlinsen kann eine (hier nicht gezeigte) Schutzschicht vorgesehen sein, deren Brechungsindex vorzugsweise um mindestens 0,3 von dem Brechungsindex der Zylinderlinsen abweicht.

Kipp- oder Wechselbilder, die verschiedenfarbige Motive zeigen, sind bekannt. Um die verschiedenfarbigen Motive zu erzeugen, werden die in den einzelnen Streifen 28A, 28B liegenden Motivteile der Sollbilder üblicherweise in der gewünschten Form aufgedruckt. Die Besonderheit der hier beschriebenen Wechselbilder besteht nun darin, dass die Motive der Sollbilder 14A, 14B durch kontrastierende, unterschiedlich reflektierende Bildbereiche gebildet sind. Um Motive mit unterschiedliche Reflexionseigenschafen zu erzeugen, können beispielsweise die in den einzelnen Streifen 28A, 28B liegenden Motivteile der Sollbilder durch parallel zur Längsrichtung der Zylinderlinsen angeordnete Reliefs gebildet werden. Hierbei überlagern sich allerdings die optischen Wirkungen der Linsen und Mikrospiegel derart, dass eine Ablenkung der Strahlung in einen engen definierten Winkelbereich praktisch nicht möglich ist, was zu einem vergleichsweise geringen Kontrast führt.

Um dennoch einen ausreichenden Kontrast erzeugen zu können, wird erfindungsgemäß wie folgt vorgegangen:

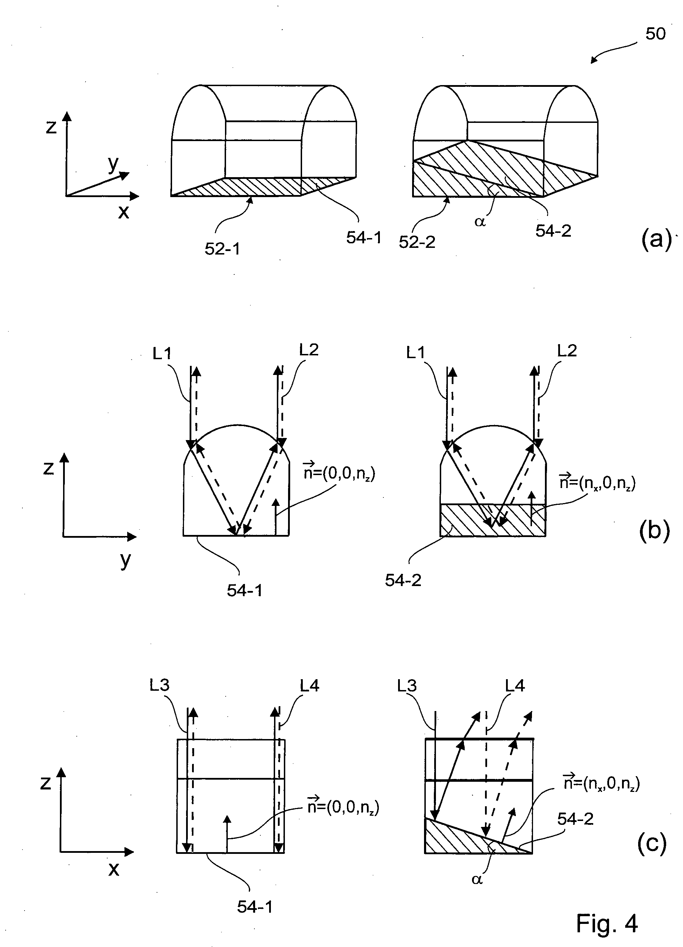

Der Aufbau und die prinzipielle Funktionsweise eines erfindungsgemäßen Sicherheitselements 20, beispielsweise des Transferelements 12 der Fig.1, wird nun mit Bezug auf die Figuren 4 bis 8 näher beschrieben.

In Figur 4 ist der prinzipielle Aufbau eines erfindungsgemäßen Linsenrasterbilds 50 gezeigt, wobei Fig. 4(a) jeweils einen Ausschnitt aus dem Linsenrasterbild mit jeweils unter einer Zylinderlinse angeordneten, als Mikrospiegel ausgebildeten Facetten 52-1 und 52-2 einer ersten und einer zweiten Art perspektiv zeigt. In den Figuren 4(b) und 4(c) sind die dazugehörigen Schnitte durch die y-z-Ebene (Fig. 4(b)) bzw. durch die x-z-Ebene (Fig. 4(c)) gezeigt. Die Achse der Zylinderlinsen ist durch die Brennpunktlinie der Zylinderlinsen bestimmt und verläuft hier in x-Richtung.

Unter der Annahme idealisierter Zylinderlinsen ist in Fig. 4(b) jeweils exemplarisch der Strahlengang der rechten bzw. linken Randstrahlen L1, L2 für den Fall senkrechten Lichteinfalls (entspricht senkrechter Aufsicht), in Fig. 4(c) der Strahlengang von zwei in Richtung der Zylinderachse (hier x-Achse) beabstandeten Strahlen L3, L4 eingezeichnet. Die Facetten 52-1, 52-2 befinden sich dabei im Wesentlichen in der Brennebene der Zylinderlinsen.

Die Facetten 52-1, 52-2 weisen jeweils eine Reflexionsfläche 54-1, 54-2 auf, die die optisch wirksame Fläche der Facette ist und deren Orientierung durch die Angabe des Oberflächennormalenverktors $\vec{n}$ bestimmt ist, der bei Normierung auf 1 und Annahme einer positiven z-Komponente bereits allein durch die $n_x$- und ny-Komponenten bestimmt ist.

Fig. 4(b) und Fig. 4(c) zeigen links eine erfindungsgemäße Facette 52-1, deren Reflexionsfläche 54-1 nicht gegen die Oberfläche der Linsenanordnung geneigt ist. Für die gezeigte Facette sind sowohl die $n_x$-Komponente als auch die ny-Komponente des Oberflächennormalenvektors $\vec{n}$ null. Die einfallende Strahlung (Lichtstrahlen L1, L2 und L3, L4) wird in diesem Fall jeweils in dieselbe Richtung zurückgeworfen, aus der sie eingetreten ist. Die Lichtstrahlen L1, L2 bzw. L3, L4 verlassen die Linsenanordnung durch die Linse, durch die sie auch eingefallen sind, und werden vollständig in die Ursprungsrichtung zurückgeworfen.

Bei der in Fig. 4(b) und 4(c) rechts gezeigten erfindungsgemäßen Facette 52-2 ist die Reflexionsfläche 54-2 gegen die Oberfläche der Linsenanordnung und parallel zur Längsrichtung der Zylinderlinsen bzw. in Krümmungsrichtung der Zylinderlinsen geneigt (Neigungswinkel α). Der Oberflächennormalenvektor $\vec{n}$ weist hier eine Komponente in Richtung der x-Achse auf, die $n_y$-Komponente der Facette 52-2 dagegen ist null.

Wie im Folgenden gezeigt, wirken die Facetten bzw. die Zylinderlinsen gemäß der Erfindung in unterschiedlichen Ebenen.

In der Projektion in die y-z-Ebene (Fig. 4(b) rechts) zeigt die Facette 52-2 des erfindungsgemäßen Linsenrasterbilds 50 einen Einfluss der Linsen, der in dieser Ebene allerdings im Wesentlichen zu den gleichen Richtungsänderungen führt wie in dem links gezeigten Fall, bei dem die Facette 52-1 nicht gegen die Oberfläche der Linsenanordnung geneigt ist (Neigungswinkel α = 0°). Streng genommen gilt dies als eine gute Näherung nur für kleine Spiegelneigungen, d. h. für Facetten mit Neigungswinkel kleiner als etwa 10 ° bis 20 °. Bei größeren Neigungen der Facette 52-2 wird die Strahlung nach Verlassen der Linsenanordnung noch etwas aufgefächert.

In der x-z-Ebene bewirkt die Facette 52-2 hingegen eine Ablenkung der einfallenden Strahlung L3, L4, wie in Fig. 4(c) links gezeigt. Hier werden die Ausbreitungsrichtungen der einfallenden Lichtstrahlen L3, L4 durch Reflexion an der geneigten Facette 52-2 verändert. Gleichzeitig tritt beim Austritt aus der Linsenanordnung an der Oberseite der Zylinderlinsen ein Brechungseffekt auf, der die Ablenkung noch verstärkt. Bei Betrachtung aus Richtung der senkrecht einfallenden Lichtstrahlen erscheint das Linsenrasterbild 50 daher im Ausführungsbeispiel im Bereich der Facette 52-2 dunkler als im Bereich der Facette 52-1.

Damit verlassen bei dem erfindungsgemäßen Linsenrasterbild Bündel parallel einfallender Lichtstrahlen die Linsenanordnung wieder als weitgehend paralleles Strahlenbündel in eine Richtung, die durch die Neigung der Facette vorgegeben ist. Durch Variation der Neigung nur in Richtung der x-Achse bzw. Variation nur der $n_x$-Komponente des jeweiligen Oberflächennormalenvektors $\vec{n}$ der Facetten (die $n_y$- Komponente ist null) lassen sich daher sehr kontrastreiche Darstellungen realisieren.

Ob der Bereich der Facette 55-1 oder der Bereich der Facette 55-2 heller bzw. dunkler erscheint, hängt letztendlich davon ab, wie die Umgebung ausgeleuchtet ist. Ein Betrachter blickt in einen durch Brechung der Lichtstrahlen an der Oberfläche der Linsen, Reflexion an den Facetten und erneute Brechung an der Oberfläche der Linsen mehr oder weniger weit aufgefächerten Raumwinkelbereich der Umgebung. Die Helligkeit der Umgebung in diesem Raumwinkelbereich gibt vor, ob der zugehörige Bereich dem Betrachter hell oder dunkel erscheint. Je größer dieser Raumwinkelbereich ist, desto größer ist der Bereich, über den die Helligkeit der Umgebung praktisch gemittelt wird und desto schwächer wird der Kontrast.

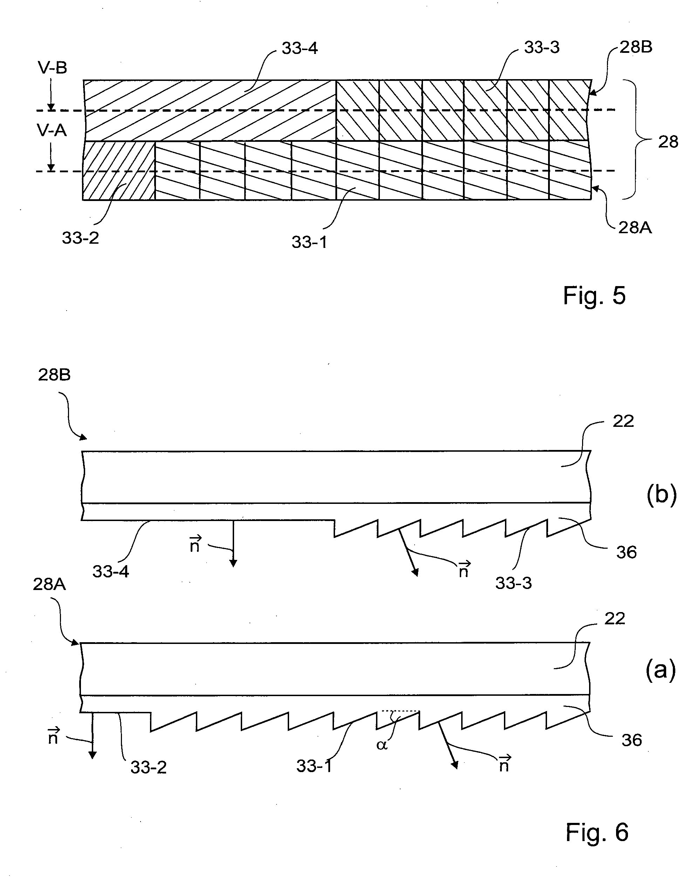

Das Motivbild 26 ist im Ausführungsbeispiel aus einer Mehrzahl von identischen Elementarzellen 28 zusammengesetzt, von denen eine ausschnittsweise in Fig. 5 separat in schematischer Weise gezeigt ist, wobei, wie auch in den weiteren Figuren, nur die für die Erläuterung des Funktionsprinzips erforderlichen Teile des Aufbaus dargestellt sind. Die Elementarzellen 28 sind im Raster des Linsenrasters zueinander versetzt angeordnet (Fig. 2). Jede der Elementarzellen 28 ist in gleicher Weise parallel zu der Achse der darüber angeordneten (und in Fig. 5 nicht gezeigten) Zylinderlinse in zwei gleich große Streifen bzw. Teilflächen 28A, 28B zerlegt. Die Teilfläche 28A ist dabei dem ersten Sollbild 14A, die Teilfläche 28B dem zweiten Sollbild 14B zugeordnet.

Die Teilflächen 28A, 28B weisen jeweils eine Mehrzahl von optisch wirksamen Facetten 33-1, 33-2, 33-3, 33-4 auf, deren Orientierung jeweils gleich ist. In Draufsicht gesehen (Fig. 5) sind die Facetten streifenförmige Spiegelflächen, die zueinander parallel ausgerichtet sind. Die Orientierung der den einzelnen Teilflächen zugeordneten Facetten 33-1 und 33-2 (Teilfläche 28A) bzw. 33-3 und 33-4 (Teilfläche 28B) unterscheidet sich jedoch, wie nachfolgend noch näher erläutert. Im Ausführungsbeispiel sind daher in jeder der Teilflächen 28A, 28B zwei Gruppen von Facetten mit unterschiedlicher Orientierung vorgesehen, die bei Betrachtung mit dem Linsenraster die visuell erkennbaren, kontrastierenden Bildbereiche 16A, 16B, 17A, 17B der Sollbilder 14A, 14B erzeugen.

Die Erfindung ist nicht auf die Unterteilung in zwei Gruppen beschränkt. Vielmehr können auch weitere Gruppen von Facetten mit unterschiedlicher Orientierung vorgesehen sein, beispielsweise zur Erzeugung verschiedener Hell-Dunkel-Effekte oder auch zur Erzeugung eines Graustufenbilds.

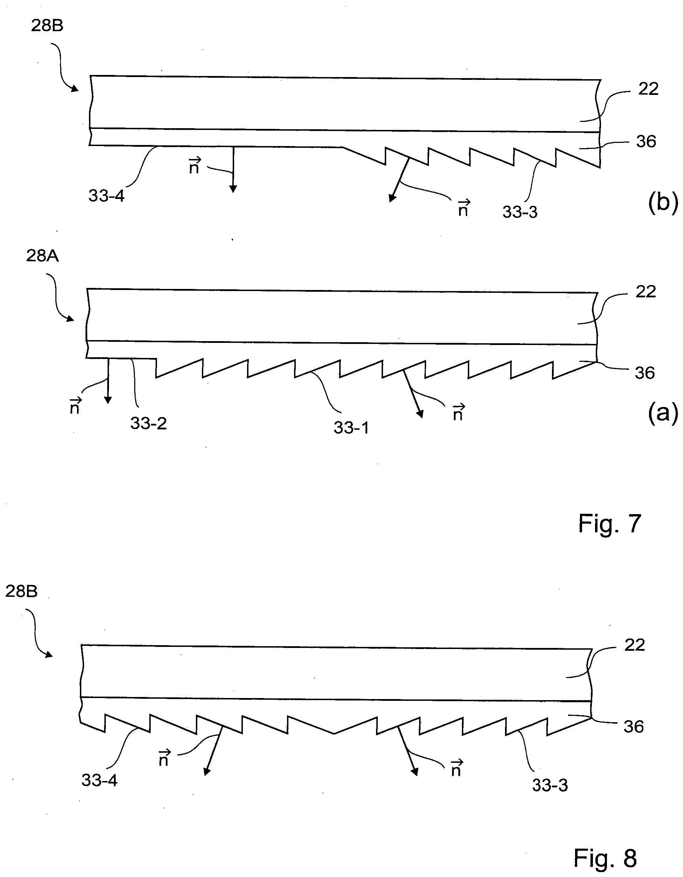

In Figur 6 ist die Schnittansicht entlang der Linie V-A (Fig. 6(a)) bzw. entlang der Linie V-B (Fig. 6(b)) von Fig. 5 dargestellt, wobei die Darstellung in Fig. 6 sowie auch in den anderen Figuren nicht maßstabsgetreu ist, sondern teilweise zur besseren Darstellbarkeit stark übertrieben ist. Ferner ist zur Vereinfachung der Darstellung in Fig. 6 sowie auch in den Figuren 7 und 8 eine optional vorhandene reflektierende oder hochbrechende Beschichtung auf den Facetten nicht eingezeichnet.

Mit Bezug auf Fig. 6 umfasst die Motivschicht 26 eine auf den Träger 22 aufgebrachte Prägeschicht 36, in der die optisch wirksamen Facetten 33-1, 33-2, 33-3, 33-4 ausgebildet sind, wobei die so strukturierte Prägeschicht 36 bevorzugt mit einer reflektierenden oder reflexionserhöhenden Beschichtung beschichtet ist. Auf die Prägeschicht 36 kann beispielsweise vollflächig ein Metall, beispielsweise Aluminium aufgedampft werden, so dass eine vollflächige Metallbeschichtung entsteht.

Wie in Fig. 6 ersichtlich ist, ist die Neigung $\alpha$ der Facetten in jeder Gruppe gleich. Jedoch ist die Neigung von Facetten benachbarter Gruppen verschieden. Die ny-Komponente des Oberflächennormalenvektors $\overleftrightarrow{n}$ jeder der Facetten 33-1, 33-2, 33-3, 33-4 ist erfindungsgemäß null. Für die Facetten 33-2 und 33-4 ist auch die

$n_x$-Komponente des Oberflächennormalenvektors null, d. h. der Neigungswinkel $\alpha$ dieser Facetten beträgt 0°. Die Gitterperiode der ein periodisches Sägezahngitter bildenden Facetten 33-1 bzw. 33-3 liegt bevorzugt zwischen 2,5 $\mu$m und 100 $\mu$m und insbesondere zwischen 5 $\mu$m und 20 $\mu$m. Beispielsweise beträgt die Gitterperiode 10 $\mu$m.

Je nach Betrachtungs- bzw. Beleuchtungssituation erscheinen entweder die Facetten 33-1 bzw. 33-3 oder die Facetten 33-2 bzw. 33-4 bei Betrachtung durch das Linsenraster hell. Beim Kippen des Sicherheitselements in einer Richtung parallel zu der Längsachse der Zylinderlinsen 24 wird der Betrachter daher bei dem jeweiligen Motiv einen Kontrastwechsel wahrnehmen, d. h. vorher hell erscheinende Bildbereiche des Motivs erscheinen dann dunkel, vorher dunkel erscheinende Bildbereiche des Motivs erscheinen nach dem Kippen hell. Beim Kippen senkrecht zur Längsachse der Zylinderlinsen 24 hingegen erfolgt ein Motivwechsel, wie dies in Fig. 2 dargestellt ist.

Die optisch wirksamen Facetten der Teilflächen 28A, 28B können auch eine zueinander unterschiedliche Orientierung aufweisen, wodurch sich weitere interessante Hell-Dunkel-Effekte realisieren lassen, wie nachfolgend erläutert. So zeigt Figur 7 ein weiteres Ausführungsbeispiel eines erfindungsgemäßen Motivbilds 26, von dem exemplarisch eine Elementarzelle im Querschnitt dargestellt ist. Wie in Fig. 7 ersichtlich ist, unterscheiden sich die Facetten 33-1 und 33-3 der Teilflächen 28A, 28B in ihrer Neigung bzw. in der $n_x$-Komponente ihres Oberflächennormalenvektors $\vec{n}$. Die $n_y$-Komponente des Oberflächennormalenvektors $\vec{n}$ jeder der Facetten 33-1, 33-2, 33-3, 33-4 ist erfindungsgemäß null. Für die Facetten 33-2 bzw. 33-4 ist auch die $n_x$-Komponente des Oberflächennormalenvektors $\vec{n}$ null. Der Neigungswinkel $\alpha$ für diese Facetten beträgt entsprechend 0°.

Je nach Betrachtungs- bzw. Beleuchtungssituation erscheinen daher entweder die Facetten 33-1, die Facetten 33-3 oder die Facetten 33-2 bzw. 33-4 bei Betrachtung durch das Linsenraster hell.

Im Ausführungsbeispiel sind die alphanumerischen Zeichen oder Symbole (z. B . die Buchstaben "L" und "P") der zwei darzustellenden Motive der Sollbilder 14A, 14B durch die ein periodisches Sägezahngitter ausbildenden Facetten 33-1 bzw. 33-3, der Hintergrund durch die die Facetten 33-2 bzw. 33-4 gebildet. Beim Kippen des Sicherheitselements 20 in Nord-Süd-Richtung bzw. in einer Richtung senkrecht zur Längsachse der Zylinderlinsen 24 wechselt daher beispielsweise ein erstes Motiv mit hell erscheinendem Buchstaben vor dunkel erscheinendem Hintergrund zu einem zweiten Motiv mit dunkel erscheinendem Buchstaben vor hell erscheinendem Hintergrund.

Figur 8 zeigt eine weitere Möglichkeit, den Hell-Dunkel-Kontrast zu steigern. Wie exemplarisch anhand der Querschnittsansicht des Teilbereichs 28B in Figur 8 dargestellt ist, kann (können) auch der zweite Bildbereich (und auch gegebenenfalls weitere Bildbereiche) des Sollbilds durch eine Mehrzahl von optisch wirksamen Facetten gebildet werden. So unterscheiden sich die Facetten 33-3 und 33-4 der Teilfläche 28B erfindungsgemäß in ihrer Neigung bzw. in der $n_x$-Komponente ihres Oberflächennormalenvektors $\vec{n}$ (die $n_y$-Komponente des Oberflächennormalenvektors $\vec{n}$ der Facetten 33-3, 33-4 ist null). Durch den sich daraus ergebenden Unterschied in der Ablenkung der Strahlung sowie den daraus resultierenden großen Winkelbereich lassen sich im Vergleich zu der in Fig. 7 gezeigten Ausgestaltung noch deutlichere Kontraste zwischen den verschiedenen Bildbereichen des Sollbilds erzeugen.

Bei den in den Figuren 6 bis 8 gezeigten Ausgestaltungen liegen in den Teilflächen 28A bzw. 28B jeweils Facetten mit nur zwei verschiedenen Orientierungen vor. Damit wechseln die Motivdarstellungen, wie in Fig.1 gezeigt, beim Kippen in Ost-West-Richtung zwischen einer Positiv- und einer Negativdarstellung der zugeordneten Sollbilder.

In weiteren, hier nicht gezeigten Ausgestaltungen liegen innerhalb der jeweils einem der Sollbilder zugeordneten Teilflächen 28A bzw. 28B Facetten mit mehr als zwei verschiedenen Orientierungen, insbesondere mit mindestens drei verschiedenen Orientierungen vor. Je nach Betrachtungs- und Beleuchtungssituation erscheinen die zugehörigen Facetten bei Betrachtung durch das Linsenraster unter drei verschiedenen Betrachtungswinkeln hell bzw. dunkel. Damit lassen sich nicht nur die vorstehend beschriebenen Kontrastwechsel, sondern echte Bildwechsel auch beim Ost-West-Kippen erzeugen.

Eine Änderung der Orientierungen der Facetten kann auch in einem gewissen Motivbildbereich kontinuierlich erfolgen, so dass sich die Orientierungen bzw. die Neigungen benachbarter Gruppen von Facetten nur wenig unterscheiden. Damit lässt sich bei einem Linsenrasterbild, bei dem die Längsachsen der Zylinderlinsen wie bei dem Linsenrasterbild des in Fig. 1 gezeigten Transferelements 12 in horizontaler Richtung (bezogen auf das Sicherheitselement) verlaufen, beim Ost-West-Kippen beispielsweise ein Laufeffekt realisieren.

Weiterhin kann durch eine geeignete Orientierung der Facetten eine makroskopische Wölbung imitiert werden. Das Grundprinzip solcher Facettenanordnungen ist beispielsweise in der Druckschrift DE 10 2009 056 934 A1 erläutert, deren Offenbarungsgehalt insoweit in die vorliegende Beschreibung aufgenommen wird. Erfindungsgemäß ist die Nachstellung auf Wölbungen beschränkt, deren Höhe sich im Wesentlichen nur in Richtung der Achse der Zylinderlinsen ändert.

In den bisher beschriebenen Ausgestaltungen sind die Achsen der Zylinderlinsen bezogen auf das Sicherheitselement in horizontaler Richtung angeordnet. Die vorstehenden Ausführungen sollen jedoch nicht so verstanden werden, dass die Erfindung in irgendeiner Weise auf die hier exemplarisch gewählte Anordnung der Linsenachsen beschränkt ist. Vielmehr können die Zylinderlinsen auch in anderer Weise angeordnet sein, so dass beispielsweise die entsprechenden Bildwechsel bzw. weiteren beschriebenen Effekte beim Kippen um entsprechend andere Achsen auftreten.

So können die Zylinderlinsen auch unter einem Winkel von 45 ° zur Horizontalen (bezogen auf das Sicherheitselement) angeordnet sein. In diesem Fall kann der Betrachter bei einem Kippen des Sicherheitselements in Nord-Süd-Richtung bei bestimmten Kippwinkeln einen Wechsel zwischen den verschiedenen Sollbildern wahrnehmen, während beim Kippen um dieselbe Achse gleichzeitig die Helligkeit der unterschiedlichen Bildbereiche innerhalb des jeweiligen Sollbilds variiert. Damit kann beim Kippen beispielsweise ein erstes Sollbild mit einem Laufeffekt in ein zweites Sollbild mit einem Wölbeffekt wechseln.

In weiteren Ausgestaltungen kann die reflektierende oder reflexionserhöhende Beschichtung auch nur bereichsweise, insbesondere in Form von Mustern, Zeichen oder einer Codierung, vorliegen. So können die mit einer Metallbeschichtung versehenden Facetten bereichsweise in Form eines Symbols oder einer Wertzahl metallisiert oder demetallisiert sein. In einer besonders vorteilhaften Ausgestaltung sind die den Sollbildern 14A, 14B zugeordneten Teilflächen 28A, 28B in makroskopischen Dimensionen jeweils in unterschiedlichen Bereichen metallisiert bzw. demetallisiert.

Beispielsweise sind die Teilbereiche 28A in makroskopischen Dimensionen in Form einer Wertzahl (z.B. "50") metallisiert, wobei die zugehörigen Facetten beim Kippen in Ost-West-Richtung einen Laufeffekt zeigen. Der metallisierte Bereich bildet dabei ein makroskopisches, mit bloßem Auge ohne Hilfsmittel, insbesondere ohne Vergrößerung durch die Mikrolinsen sichtbares zusätzliches Motiv. Die Teilbereiche 28B sind makroskopisch in einem anderen Bereich in Form eines Symbols (z.B. Euro-Zeichen) metallisiert. Die zugehörigen Facetten weisen dabei z.B. einen Wölbeffekt auf. Beim Kippen des Sicherheitselements erscheint dann das jeweils andere Sollbild in den Bereichen, in denen das erste Sollbild nicht metallisiert ist, quasi "aus dem Nichts".

Solche Effekte sind ungewöhnlich und für einen Betrachter überraschend und führen daher zu einem visuell attraktiven und auffälligen Gesamteindruck mit hohem Aufmerksamkeits- und Wiederkennungswert.

Ein mögliches Herstellungsverfahren für solche nur bereichsweise beschichtete Facetten ist in der WO 2011/138039 A1 beschrieben. Um Beschichtungsfehler zu vermeiden, die beispielsweise bei großen zusammenhängenden Vertiefungsbereichen durch die unerwünschte Entfernung bzw. Übertragung der Beschichtung entstehen können, sind zwischen den Teilbereichen optional noch Stützstrukturen in Form kleiner erhabener Elemente, insbesondere Stege oder Stützpfeiler, vorgesehen.

Die bereichsweise Entfernung der reflektierenden oder reflexionserhöhenden Beschichtung in den einzelnen Teilflächen kann aber beispielsweise auch per Laserablation der Beschichtung durch die Linsen erfolgen.

In weiteren, hier nicht gezeigten Ausgestaltungen kann ein Teil der Facetten zusätzlich mit einer weiteren, feineren Strukturierung versehen sein. Eine derartige Strukturierung wird beispielsweise durch eine Nanostrukturierung, insbesondere durch farbige Subwellenlängenstrukturen, die in die nullte Beugungsordnung reflektieren, gebildet. Natürlich sind auch andere Strukturen, beispielsweise Nanostrukturen wie Mottenaugenstrukturen, oder diffraktive Mikroreliefstrukturen, die eine holographische Information tragen, möglich.

Bezugszeichenliste

| 10 | Banknote |
| 12 | Transferelement |
| 14A,14B | Sollbilder |
| 16A, 16B | Bildbereiche der Sollbilder |
| 17A, 17B | Bildbereiche der Sollbilder |
| 18,19 | Kipprichtungen |
| 20 | Sicherheitselement |
| 22 | Träger |
| 24 | Zylinderlinsen |
| 26 | Motivschicht |
| 28A, 28B | Streifen |
| 30A, 30B | Betrachtungsrichtungen |
| 32 | weitere Schichten |
| 33-1,33-2 | Facette |
| 33-3,33-4 | Facette |
| 36 | Prägeschicht |
| 40 | Linsenrasterbild |
| 42-1, 42-2 | Facette |
| 44-1, 44-2 | Reflexionsfläche |
| 50 | Linsenrasterbild |
| 52-1, 52-2 | Facette |
| 54-1, 54-2 | Reflexionsfläche |
| L1, L2, L3, L4 | Strahlung |

**Patentansprüche**

1.  Sicherheitselement (20) zur Absicherung von Sicherheitspapieren, Wertdokumenten und anderen Datenträgern, mit einem Linsenrasterbild zur unskalierten Darstellung von zwei oder mehr vorbestimmten Sollbildern (14A; 14B), deren Motive durch visuell erkennbare, kontrastierende Bildbereiche gebildet sind, wobei

    - das Linsenrasterbild ein Linsenraster und ein von dem Linsenraster beabstandet angeordnetes Motivbild enthält, das bei Betrachtung mit dem Linsenraster die vorbestimmten Sollbilder (14A; 14B) zeigt, wobei

    - das Linsenraster aus einer Mehrzahl von zylindrischen Mikrolinsen (24) gebildet ist, die in einem Raster angeordnet sind, durch welches ein Koordinatensystem mit einer ersten Koordinatenachse, die durch die Brennpunktlinien der zylindrischen Mikrolinsen bestimmt ist, und einer zweiten Koordinatenachse aufgespannt ist, die senkrecht auf der ersten Koordinatenachse steht,

    - das Motivbild (26) aus einer Mehrzahl von Elementarzellen gebildet ist, welche im Raster des Linsenrasters zueinander versetzt angeordnet sind, wobei

    - jede der Elementarzellen in zwei oder mehr Teilflächen (28A; 28B) parallel zu der ersten Koordinatenachse zerlegt ist, jede der Teilflächen genau einem der Sollbilder zugeordnet ist und jeweils einen unskalierten Ausschnitt des Sollbilds enthält, dem die Teilfläche zugeordnet ist,

    **dadurch gekennzeichnet, dass**

    - das Motivbild (26) durch eine Mehrzahl optisch wirksamer Facetten (33-1; 33-2; 33-3; 33-4) gebildet ist, deren Orientierungen durch ihre Normalenvektoren bestimmt sind, wobei

    - in dem Motivbild zumindest zwei Gruppen von optisch wirksamen Facetten (33-1; 33-2; 33-3; 33-4) mit unterschiedlicher Orientierung vorgesehen sind, wobei die zumindest zwei Gruppen jeweils zumindest eine optisch wirksame Facette enthalten und bei Betrachtung mit dem Linsenraster die visuell erkennbaren, kontrastierenden Bildbereiche der Sollbilder (14A; 14B) erzeugen, und wobei

    - die Normalenvektoren der optisch wirksamen Facetten keine Komponente in Richtung der zweiten Koordinatenachse aufweisen oder eine Komponente in Richtung der zweiten Koordinatenachse aufweisen, die um zumindest eine Größenordnung kleiner ist als die Komponente in Richtung der ersten Koordinatenachse.

2.  Sicherheitselement nach Anspruch 1, **dadurch gekennzeichnet, dass** die Normalenvektoren der optisch wirksamen Facetten jeweils nur eine Komponente in Richtung der ersten Koordinatenachse aufweisen.

3.  Sicherheitselement nach Anspruch 1 oder 2, **dadurch gekennzeichnet, dass** die optisch wirksamen Facetten als reflektive Facetten ausgebildet sind.

4.  Sicherheitselement nach einem der obigen Ansprüche, **dadurch gekennzeichnet, dass** in dem Motivbild zumindest drei Gruppen von optisch wirksamen Facetten mit unterschiedlicher Orientierung vorgesehen sind, wobei jeweils zwei der Gruppen bei Betrachtung mit dem Linsenraster die visuell erkennbaren, kontrastierenden Bildbereiche eines der Sollbilder erzeugen.

5. Sicherheitselement nach einem der obigen Ansprüche, **dadurch gekennzeichnet, dass** in zumindest einer der einem der Sollbilder zugeordneten Teilflächen zumindest drei Gruppen von optisch wirksamen Facetten mit unterschiedlicher Orientierung vorgesehen sind.

6. Sicherheitselement nach einem der obigen Ansprüche, **dadurch gekennzeichnet, dass** zumindest eine der Gruppen mehrere der optisch wirksamen Facetten mit gleicher Orientierung aufweist, insbesondere, dass jede der Gruppen mehrere der optisch wirksamen Facetten mit gleicher Orientierung aufweist.

7. Sicherheitselement nach einem der obigen Ansprüche, **dadurch gekennzeichnet, dass** sich die Orientierungen der optisch wirksamen Facetten zumindest bereichsweise kontinuierlich ändern.

8. Sicherheitselement nach einem der obigen Ansprüche, **dadurch gekennzeichnet, dass** die optisch wirksamen Facetten in den Teilflächen für alle Motivdarstellungen jeweils gleich in der Art orientiert sind, dass ein Betrachter in einer anderen Betrachtungs- oder Beleuchtungssituation die Negativdarstellungen der Motivdarstellung der zugeordneten Sollbilder sieht.

9. Sicherheitselement nach einem der obigen Ansprüche, **dadurch gekennzeichnet, dass** die optisch wirksamen Facetten ein periodisches oder aperiodisches Sägezahngitter bilden und die Gitterperiode der Facetten zwischen 2,5 $\mu$m und 100 $\mu$m, bevorzugt zwischen 5 $\mu$m und 20 $\mu$m liegt, und/oder" dass die optisch wirksamen Facetten als im Wesentlichen ebene Flächenstücke ausgebildet sind.

10. Sicherheitselement nach einem der obigen Ansprüche, **dadurch gekennzeichnet, dass** die optisch wirksamen Facetten eine Strukturtiefe von 0 $\mu$m bis 10 $\mu$m, bevorzugt von 1,5 $\mu$m bis 4 $\mu$m aufweisen, und/oder" dass die Abmessung der optisch wirksamen Facetten in Richtung der ersten Koordinatenachse zwischen 2,5 $\mu$m und 100 $\mu$m, bevorzugt zwischen 5 $\mu$m und 20 $\mu$m liegt.

11. Sicherheitselement nach einem der obigen Ansprüche, **dadurch gekennzeichnet, dass** die Ausdehnung der zylindrischen Mikrolinsen in Richtung der ersten Koordinatenachse mehr als 250 $\mu$m, bevorzugt mehr als 500 $\mu$m, besonders bevorzugt mehr als 2 mm beträgt, und/oder,, dass die Ausdehnung der zylindrischen Mikrolinsen in Querrichtung zwischen 5 $\mu$m und 100 $\mu$m, vorzugsweise zwischen

10 $\mu$m und 30 $\mu$m beträgt.

12. Sicherheitselement nach einem der obigen Ansprüche, **dadurch gekennzeichnet, dass** auf den optisch wirksamen Facetten zumindest bereichsweise eine reflektierende oder reflexionserhöhende Beschichtung ausgebildet ist, insbesondere, dass die reflektierende oder reflexionserhöhende Beschichtung bereichsweise, vorzugsweise in Form von Mustern, Zeichen oder einer Codierung, ausgebildet ist, wobei sich die Bereiche, in denen die Beschichtung ausgebildet ist, für die Teilflächen, die jeweils unterschiedlichen Sollbildern zugeordnet sind, voneinander unterscheiden.

13. Sicherheitselement nach einem der obigen Ansprüche, **dadurch gekennzeichnet, dass** auf den optisch wirksamen Facetten zumindest bereichsweise eine farbkippende Beschichtung ausgebildet ist.

14. Sicherheitselement nach einem der obigen Ansprüche, **dadurch gekennzeichnet, dass** auf einem Teil der optisch wirksamen Facetten eine zusätzliche Strukturierung, bevorzugt eine Nanostrukturierung und/oder eine diffraktive Struktur, vorgesehen ist.

15. Sicherheitselement nach einem der obigen Ansprüche, **dadurch gekennzeichnet, dass** das Linsenrasterbild ein Wechselbild, ein Bewegungsbild, ein Pumpbild, ein Morphbild oder ein Stereobild ist.

16. Sicherheitselement nach einem der obigen Ansprüche, **dadurch gekennzeichnet, dass** das Sicherheitselement ein Sicherheitsfaden, ein Aufreißfaden, ein Sicherheitsband, ein Sicherheitsstreifen, ein Patch oder ein Etikett zum Aufbringen auf ein Sicherheitspapier, Wertdokument oder dergleichen ist.

17. Datenträger mit einem Sicherheitselement nach einem der Ansprüche 1 bis 16.

18. Verfahren zum Herstellen eines Sicherheitselements (20) mit einem Linsenrasterbild zur unskalierten Darstellung von zwei oder mehr vorbestimmten Sollbildern (14A; 14B), deren Motive durch visuell erkennbare, kontrastierende Bildbereiche gebildet sind, bei dem

     - zur Erzeugung eines Linsenrasterbilds ein Motivbild (26) beabstandet von einem Linsenraster angeordnet wird, so dass das Motivbild (26) bei Betrachtung mit dem Linsenraster die vorbestimmten Sollbilder (14A; 14B) zeigt, wobei
     - das Linsenraster aus einer Mehrzahl von zylindrischen Mikrolinsen (24) gebildet wird, die in einem Raster angeordnet sind, durch welches ein Koordinatensystem mit einer ersten Koordinatenachse, die durch die Brennpunktlinien der zylindrischen Mikrolinsen bestimmt ist, und einer zweiten Koordinatenachse aufgespannt ist,

- das Motivbild (26) aus einer Mehrzahl von Elementarzellen gebildet wird, welche im Raster des Linsenrasters zueinander versetzt angeordnet werden, wobei

- jede der Elementarzellen in zwei oder mehr Teilflächen (28A; 28B) parallel zu der ersten Koordinatenachse zerlegt wird, jede der Teilflächen genau einem der Sollbilder zugeordnet wird und jeweils mit einem unskalierten Ausschnitt des Sollbilds versehen wird, dem die Teilfläche zugeordnet ist, wobei

- das Motivbild (26) durch eine Mehrzahl optisch wirksamer Facetten (33-1; 33-2; 33-3; 33-4) gebildet wird, deren Orientierungen durch ihre Normalenvektoren bestimmt werden, wobei

- in dem Motivbild zumindest zwei Gruppen von optisch wirksamen Facetten (33-1; 33-2; 33-3; 33-4) mit unterschiedlicher Orientierung vorgesehen werden, wobei die zumindest zwei Gruppen jeweils mit zumindest einer optisch wirksamen Facette versehen werden und bei Betrachtung mit dem Linsenraster visuell erkennbare, kontrastierende Bildbereiche der Sollbilder (14A; 14B) erzeugen, und wobei

- die Normalenvektoren der optisch wirksamen Facetten keine Komponente in Richtung der zweiten Koordinatenachse aufweisen oder eine Komponente in Richtung der zweiten Koordinatenachse aufweisen, die um zumindest eine Größenordnung kleiner ist als die Komponente in Richtung der ersten Koordinatenachse.

**Claims**

1. A security element (20) for securing security papers, value documents and other data carriers, having a lenticular image for displaying, unscaled, two or more predetermined target images (14A; 14B) whose motifs are formed by visually perceptible, contrasting image regions,

   - the lenticular image including a lens grid and, arranged spaced apart from the lens grid, a motif image that, when viewed with the lens grid, displays the predetermined target images (14A; 14B),

   - the lens grid being formed from a plurality of cylindrical microlenses (24) that are arranged in a grid by which a coordinate system is generated having a first coordinate axis that is determined by the focal lines of the cylindrical microlenses, and a second coordinate axis that is perpendicular to the first coordinate axis,

   - the motif image (26) being formed from a plurality of unit cells that are arranged offset to each other in the grid of the lens grid,

   - each of the unit cells being broken down into two or more sub-areas (28A; 28B) parallel to the first coordinate axis, each of the sub-areas being allocated to precisely one of the target images and each including an unscaled section of the target image to which the sub-area is allocated, **characterized in that**

   - the motif image (26) is formed by a plurality of optically effective facets (33-1; 33-2; 33-3; 33-4) whose orientations are determined by their normal vectors,

   - in the motif image, at least two groups of optically effective facets (33-1; 33-2; 33-3; 33-4) having different orientations being provided, the at least two groups each including at least one optically effective facet and producing, when viewed with the lens grid, the visually perceptible, contrasting image regions of the target images (14A; 14B), and

   - the normal vectors of the optically effective facets having no component in the direction of the second coordinate axis or having a component in the direction of the second coordinate axis that is at least one order of magnitude smaller than the component in the direction of the first coordinate axis.

2. The security element according to claim 1, **characterized in that** the normal vectors of the optically effective facets each have only one component in the direction of the first coordinate axis.

3. The security element according to claim 1 or 2, **characterized in that** the optically effective facets are developed as reflective facets.

4. The security element according to one of the above claims, **characterized in that**, in the motif image, at least three groups of optically effective facets having different orientations are provided, two of the groups producing in each case, when viewed with the lens grid, the visually perceptible, contrasting image regions of one of the target images.

5. The security element according to one of the above claims, **characterized in that** in at least one of the sub-areas allocated to one of the target images are provided at least three groups of optically effective facets having different orientations.

6. The security element according to one of the above claims, **characterized in that** at least one of the groups comprises multiple of the optically effective facets having the same orientation, especially **in that** each of the groups comprises multiple of the optically effective facets having the same orientation.

7. The security element according to one of the above claims, **characterized in that** the orientations of the optically effective facets change continuously in at least some regions.

8. The security element according to one of the above claims, **characterized in that**, for all motif depictions, the optically effective facets in the sub-areas are oriented in each case identically in the manner that, in a different viewing or lighting situation, a viewer sees the inverse depictions of the motif depiction of the allocated target images.

9. The security element according to one of the above claims, **characterized in that** the optically effective facets form a periodic or aperiodic sawtooth grating and the grating period of the facets is between 2.5 $\mu$m and 100 $\mu$m, preferably between 5 $\mu$m and 20 $\mu$m, and/or **in that** the optically effective facets are developed as substantially planar surface sections.

10. The security element according to one of the above claims, **characterized in that** the optically effective facets have a pattern depth of 0 $\mu$m to 10 $\mu$m, preferably of 1.5 $\mu$m to 4 $\mu$m, and/ or **in that** the dimension of the optically effective facets in the direction of the first coordinate axis is between 2.5 $\mu$m and 100 $\mu$m, preferably between 5 $\mu$m and 20 $\mu$m.

11. The security element according to one of the above claims, **characterized in that** the dimension of the cylindrical microlenses in the direction of the first coordinate axis is more than 250 $\mu$m, preferably more than 500 $\mu$m, particularly preferably more than 2 mm, and/ or **in that** the dimension of the cylindrical microlenses in the transverse direction is between 5 $\mu$m and 100 $\mu$m, preferably between 10 $\mu$m and 30 $\mu$m.

12. The security element according to one of the above claims, **characterized in that** a reflective or reflection-increasing coating is developed in at least some regions on the optically effective facets, especially **in that** the reflective or reflection-increasing coating is developed in some regions preferably in the form of patterns, characters or a code, the regions in which the coating is developed differing from one another for the sub-areas that in each case are allocated to different target images.

13. The security element according to one of the above claims, **characterized in that** a color-shifting coating is developed in at least some regions on the optically effective facets.

14. The security element according to one of the above claims, **characterized in that** an additional patterning, preferably a nanopatterning and/or a diffractive pattern, is provided on a portion of the optically effective facets.

15. The security element according to one of the above claims, **characterized in that** the lenticular image is an alternating image, a motion image, a pump image, a morph image or a stereo image.

16. The security element according to one of the above claims, **characterized in that** the security element is a security thread, a tear strip, a security band, a security strip, a patch or a label for application to a security paper, value document or the like.

17. A data carrier having a security element according to one of claims 1 to 16.

18. A method for manufacturing a security element (20) having a lenticular image for displaying, unscaled, two or more predetermined target images (14A; 14B) whose motifs are formed by visually perceptible, contrasting image regions, in which

- to produce a lenticular image, a motif image (26) is arranged spaced apart from a lens grid such that, when viewed with the lens grid, the motif image (26) displays the predetermined target images (14A; 14B),
- the lens grid being formed from a plurality of cylindrical microlenses (24) that are arranged in a grid by which a coordinate system is generated having a first coordinate axis that is determined by the focal lines of the cylindrical microlenses, and a second coordinate axis,
- the motif image (26) being formed from a plurality of unit cells that are arranged offset to each other in the grid of the lens grid,
- each of the unit cells being broken down into two or more sub-areas (28A; 28B) parallel to the first coordinate axis, each of the sub-areas being allocated to precisely one of the target images and each being provided with an unscaled section of the target image to which the sub-area is allocated,
- the motif image (26) being formed by a plurality of optically effective facets (33-1; 33-2; 33-3; 33-4) whose orientations are determined by their normal vectors,
- in the motif image, at least two groups of optically effective facets (33-1; 33-2; 33-3; 33-4) having different orientations being provided, the at least two groups each being provided with at least one optically effective facet and producing, when viewed with the lens grid, visually perceptible, contrasting image regions of the target images (14A; 14B), and
- the normal vectors of the optically effective facets having no component in the direction of the second coordinate axis or having a component in the direction of the second coordinate axis that is at least one order of magnitude smaller than the component in the direction of the first coordinate axis.

**Revendications**

1. Élément de sécurité (20), destiné à sécuriser des papiers de sécurité, des documents de valeur et autres supports de données, avec une image lenticulaire pour la représentation non modifiée à l'échelle d'images de consigne (14A ; 14B) prédéfinies, dont les motifs sont formés par des zones d'image contrastées, visuellement identifiables,

  - l'image lenticulaire contenant une trame lenticulaire et une image à motifs écartée de la trame lenticulaire, qui lors d'une observation avec la trame lenticulaire montre les images de consigne (14A ; 14B) prédéfinies,
  - la trame lenticulaire étant formée d'une pluralité de microlentilles (24) cylindriques, qui sont placées dans une trame, laquelle définit un système de coordonnées avec un premier axe de coordonnées qui est déterminé par les lignes focales des microlentilles cylindriques et un deuxième axe de coordonnées qui est debout à la perpendiculaire sur le premier axe de coordonnées,
  - l'image à motifs (26) étant formée d'une pluralité de cellules élémentaires qui dans la trame de la trame lenticulaire sont placées décalage les unes par rapport aux autres,
  - chacune des cellules élémentaires étant divisée en deux surfaces partielles (28A ; 28B) ou plus, à la parallèle du premier axe de coordonnées, chacune des surfaces partielles étant associée à exactement l'une des images de consigne et contenant respectivement un extrait non modifié à l'échelle de l'image de consigne à laquelle est associée la surface partielle, **caractérisé en ce que**
  - l'image à motifs (26) étant formée d'une pluralité de facettes à effet optique (33-1 ; 33-2 ; 33-3 ; 33-4) dont les orientations sont déterminées par leurs vecteurs normaux
  - dans l'image à motifs étant prévus au moins deux groupes de facettes à effet optique (33-1 ; 33-2 ; 33-3 ; 33-4), avec une orientation différente, les au moins deux groupes contenant chacun au moins une facette à effet optique et lors d'une observation avec la trame lenticulaire, générant les zones d'image contrastantes, visuellement identifiables des images de consigne (14A ; 14B) et
  - les vecteurs normaux des facettes à effet optique ne comportant aucune composante dans la direction du deuxième axe de coordonnées ou une composante dans la direction du deuxième axe de coordonnées qui est plus petite d'au moins un ordre de grandeur que la composante dans la direction du premier axe de coordonnées.

2. Élément de sécurité selon la revendication 1, **caractérisé en ce que** les vecteurs normaux des facettes à effet optique ne comportent chaque fois qu'une composante dans la direction du premier axe de coordonnées.

3. Élément de sécurité selon la revendication 1 ou 2, **caractérisé en ce que** les facettes à effet optique sont conçues sous la forme de facettes à effet optique réfléchissantes.

4. Élément de sécurité selon l'une quelconque des revendications précédentes, **caractérisé en ce que** dans l'image à motifs sont prévus au moins trois groupes de facettes à effet optique avec une orientation différente, lors d'une observation avec la trame lenticulaire, chaque fois deux des groupes créant les zones d'image de l'une des images de consigne.

5. Élément de sécurité selon l'une quelconque des revendications précédentes, **caractérisé en ce que** dans au moins l'une des surfaces partielles associées à l'une des images de consigne sont prévus au moins trois groupes de facettes à effet optique avec une orientation différente.

6. Élément de sécurité selon l'une quelconque des revendications précédentes, **caractérisé en ce qu'**au moins l'un des groupes comporte plusieurs des facettes à effet optique avec une même orientation, notamment **en ce que** chacun des groupes comporte plusieurs des facettes à effet optique avec une même orientation.

7. Élément de sécurité selon l'une quelconque des revendications précédentes, **caractérisé en ce que** les orientations des facettes à effet optique varient en continu au moins par endroits.

8. Élément de sécurité selon l'une quelconque des revendications précédentes, **caractérisé en ce que** les facettes effet optique dans les surfaces partielles sont chaque fois orientées à l'identique pour toutes les représentations de motifs, de sorte qu'un observateur dans une autre situation d'observation ou d'éclairage voie les représentations négatives de la représentation du motif des images de consigne associées.

9. Élément de sécurité selon l'une quelconque des revendications précédentes, **caractérisé en ce que** les facettes à effet optique forment une grille en dents de scie périodique ou non périodique et la période de grille des facettes à effet optique se situe entre 2,5 $\mu$m et 100 $\mu$m, de préférence entre 5 $\mu$m et 20 $\mu$m, et/ou **en ce que** les facettes à effet optique sont conçues sous la forme de pièces superficielles sensiblement planes.

10. Élément de sécurité selon l'une quelconque des revendications précédentes, **caractérisé en ce que** les facettes à effet optique présentent une profondeur de structure de 0 $\mu$m à 10 $\mu$m, de préférence de 1,5 $\mu$m à 4 $\mu$m et/ ou **en ce que** la dimension des facettes à effet optique dans la direction du premier axe de coordonnées se situe entre 2,5 $\mu$m et 100 $\mu$m, de préférence entre 5 $\mu$m et 20 $\mu$m.

11. Élément de sécurité selon l'une quelconque des revendications précédentes, **caractérisé en ce que** l'extension des microlentilles cylindriques dans la direction du premier axe de coordonnées est supérieure à 250 $\mu$m, de préférence supérieure à 500 $\mu$m, de manière particulièrement préférentielle, supérieure à 2 mm et/ ou **en ce que** l'extension des microlentilles cylindriques dans la direction transversale est comprise entre 5 $\mu$m et 100 $\mu$m, de préférence entre 10 $\mu$m et 30 $\mu$m.

12. Élément de sécurité selon l'une quelconque des revendications précédentes, **caractérisé en ce que** sur les facettes à effet optique est formé au moins par endroits un revêtement réfléchissant ou augmentant la réflexion, notamment **en ce que** le revêtement réfléchissant ou augmentant la réflexion est formé par endroits, de préférence sous la forme de dessins, de caractères ou d'un codage, les endroits dans lesquels est formé le revêtement se différenciant les uns des autres pour les surfaces partielles qui sont respectivement associées à différentes images de consigne.

13. Élément de sécurité selon l'une quelconque des revendications précédentes, **caractérisé en ce que** sur les facettes à effet optique est formé au moins par endroits un revêtement renversant la couleur.

14. Élément de sécurité selon l'une quelconque des revendications précédentes, **caractérisé en ce que** sur une partie des facettes à effet optique est prévue une structuration supplémentaire, de préférence une nano-structuration et/ou une structure diffractive.

15. Élément de sécurité selon l'une quelconque des revendications précédentes, **caractérisé en ce que** l'image lenticulaire est une image changeante, une image dynamique, une image tramée, une image à motif ou une image stéréoscopique.

16. Élément de sécurité selon l'une quelconque des revendications précédentes, **caractérisé en ce que** l'élément de sécurité est un fil de sécurité, un fil d'arrachage, une bande de sécurité, un ruban de sécurité, un patch ou une étiquette à appliquer sur un papier de sécurité, un document de valeur ou similaires.

17. Support de données avec un élément de sécurité selon l'une quelconque des revendications 1 à 16.

18. Procédé destiné à fabriquer un élément de sécurité (20) avec une image lenticulaire pour la représentation non modifiée à l'échelle d'images de consigne (14A ; 14B) prédéfinies, dont les motifs sont formés par des zones d'image contrastées, visuellement identifiables,

  - lors duquel, pour la création d'une image lenticulaire, on place une image à motifs (26) à un écart d'une trame lenticulaire, de sorte que lors d'une observation avec la trame lenticulaire, l'image à motifs (26), représentent les images de consigne (14A ; 14B) prédéfinies,
  - la trame lenticulaire étant formée d'une pluralité de microlentilles (24) cylindriques, qui sont placées dans une trame, laquelle définit un système de coordonnées avec un premier axe de coordonnées qui est déterminé par les lignes focales des microlentilles cylindriques et un deuxième axe de coordonnées,
  - lors duquel on forme l'image à motifs (26) à partir d'une pluralité de cellules élémentaires que l'on place en décalage les unes par rapport aux autres dans la trame de la trame lenticulaire
  - lors duquel on divise chacune des cellules élémentaires en deux ou en plusieurs surfaces partielles (28A ; 28B) à la parallèle du premier axe de coordonnées, on associe chacune des surfaces partielles à exactement l'une des images de consigne et on la munit respectivement d'un extrait non modifié à l'échelle de l'image de consigne à laquelle est associée la surface partielle,
  - on créé l'image à motifs (26) par une pluralité de facettes à effet optique (33-1 ; 33-2 ; 33-3 ; 33-4) dont on détermine les orientations par leurs vecteurs normaux,
  - on prévoit dans l'image à motifs au moins deux groupes de facettes à effet optique à effet optique (33-1 ; 33-2 ; 33-3 ; 33-4) avec une orientation différente, les au moins deux groupes étant munis chaque fois d'au moins une facette à effet optique et lors d'une observation avec la trame lenticulaire créant des zones d'image contrastantes, visuellement identifiables des images de consigne (14A ; 14B) et
  - les vecteurs normaux des facettes à effet optique ne comportant aucune composante dans la direction du deuxième axe de coordonnées ou comportant une composante dans la direction du deuxième axe de coordonnées qui est plus petite d'au moins un ordre de grandeur que la composante dans la direction du premier axe de coordonnées.

Fig. 1

Fig. 2

L1  L2  40

z

44-1  n⃗

y

42-1

(a)

40

L1  L2

z

44-2  n⃗

y

42-2

(b)

Fig. 3

Fig. 4

Fig. 5

Fig. 6

28B

22

36

$\vec{n}$

$\vec{n}$

33-4

33-3

(b)

28A

22

36

$\vec{n}$

33-2

33-1

$\vec{n}$

(a)

Fig. 7

28B

22

36

$\vec{n}$

$\vec{n}$

33-4

33-3

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4417784 A1
- DE 102009056934 A1

- WO 2011138039 A1

**In der Beschreibung aufgeführte Nicht-Patentliteratur**

- **M.C. HUTLEY ; R. HUNT ; R.F. STEVENS ; P. SA-VANDER.** The moire magnifier. *Pure Appl. Opt.,* 1994, vol. 3, 133-142